# EUROPEAN PATENT APPLICATION

(11) **EP 2 899 298 A1**
(43) Date of publication of application: **29.07.2015**
(21) Application number: 13838846.7
(22) Date of filing: 05.07.2013
(51) Int. Cl.: C23C 28/00, C25D 5/12, C25D 5/48

(54) **SURFACE-TREATED PLATED MATERIAL AND METHOD FOR PRODUCING SAME, AND ELECTRONIC COMPONENT**

(30) Priority: 19.09.2012 JP 2012206081; 27.11.2012 JP 2012259141
(71) Applicant: JX Nippon Mining & Metals Corporation, Chiyoda-ku Tokyo 100-0004 (JP)
(72) Inventor: KODAMA, Atsushi, Hitachi-shi Ibaraki 317-0056 (JP); SHIBUYA, Yoshitaka, Hitachi-shi Ibaraki 317-0056 (JP); FUKAMACHI, Kazuhiko, Hitachi-shi Ibaraki 317-0056 (JP)
(74) Representative: Hooiveld, Arjen Jan Winfried
(86) International application number: PCT/JP2013/068557
(87) International publication number: WO 2014/045678

(57) **Abstract**

The present invention provides a surface treated plating material being suppressed in the occurrence of whiskers, maintaining satisfactory solderability and satisfactory contact resistance even when exposed to a high temperature environment, and being low in the terminal-connector insertion force. The surface treated plating material is a plating material including: a metal base material; a lower layer constituted with Ni or Ni alloy plating; and an upper layer constituted with Sn or Sn alloy plating, wherein the lower layer and the upper layer are sequentially formed on the metal base material; P and N are present on the upper layer surface; the amounts of the P and N elements deposited on the upper layer surface are respectively P: 1 × 10⁻¹¹ to 4 × 10⁻⁸ mol/cm², N: 2 × 10⁻¹² to 8 × 10⁻⁹ mol/cm².

## Description

### [Technical Field]

The present invention relates to a surface treated plating material produced by plating the surface of a base material made of a metal such as copper or a copper alloy, or stainless steel, and a method for producing the same. The present invention also relates to electronic components such as connectors, terminals, switches and leadframes using the surface treated plating material.

### [Background Art]

In general, copper or copper alloys are used as the base metal in electronic components such as connectors and terminals used in various electronic devices for vehicles, household electric and electronic appliances and OA apparatuses; these base metals are subjected to plating treatment for the purpose of improving the functions thereof such as antirust, improvement of corrosion resistance and improvement of electric properties. Examples of such plating include various types of plating such as Au, Ag, Cu, Sn, Ni, solder and Pd-plating; in particular, Sn plating materials obtained by plating Sn or Sn alloys are frequently used for the components such as connectors, terminals, switches and outer lead portions of leadframes, from the viewpoint of cost, contact reliability, solderability and others.

On the other hand, so-called Sn-based plating materials such as Sn or Sn alloys suffer from a problem of occurrence of whiskers. Whiskers as referred to herein mean grown needle crystals of Sn, and such whiskers grow from metals having relatively low melting points such as Sn and Zn. Whiskers grow to lengths of a few tens to a few hundreds µm and sometimes cause electrical short circuiting, and accordingly the prevention of the occurrence and growth of whiskers is desired.

Moreover, Sn-based plating suffers from a problem that the contact resistance increases in a high temperature environment and the solderability is degraded. Among the methods for avoiding such a problem, there is a method in which the thickness of the Sn-based plating is made thicker; however, such a method suffers from a newly emerging problem that the insertion force of connectors is increased.

Recently, the number of the pins in a connector has been increasing, and the accompanying increase of the insertion force to be exerted on the connector has also been provoking problems. Assembling operation of the connectors in, for example, vehicles frequently depends on human hand working, accordingly the increase of the insertion force increases the load applied to the hands of the workers, and hence the decrease of the insertion force for connectors is desired; however, Sn causes larger friction during mated connection of terminals, and hence requires stronger insertion/extraction force when the number of connector cores is remarkably increased.

For example, Patent Literature 1 describes an invention in which a Sn-plating layer is provided on a steel plate surface, a chemical coating containing P and Si is formed on the Sn plating layer, and the deposition amount of the chemical coating is specified.

In this invention, the solderability and the whisker resistance are described to be excellent. However, it is inferred that there is a problem that Si is present on the plating surface, and hence the contact resistance of the plating is increased in a high temperature environment.

Patent Literature 2 describes an invention in which the Sn or Sn alloy plating surface is treated with a solution having, for example, a compound containing an amino nitrogen having at least 2 or more methylene groups to which a phosphonic acid group is bonded.

In this invention, a method for post treating the Sn or Sn alloy plating with a phosphoric acid-based solution is described, but the states of being and the deposition amounts of the individual elements on the plating surface after the post treatment are not mentioned. Therefore, it is anticipated that depending on the treatment solution composition or the treatment conditions, the solderability or the whisker resistance is not improved at all.

### [Citation List]

### [Patent Literature]

[Patent Literature 1] Japanese Patent Laid-Open No. 2004-360004
[Patent Literature 2] Japanese Patent Laid-Open No. 2007-197791

### [Summary of Invention]

### [Technical Problem]

For the purpose of improving the whisker resistance and additionally reducing the insertion/extraction force in a conventional plating material in which Sn plating was performed on a Ni base plating or a Cu base plating, or a conventional three-layer plating material, the thickness of the Sn plating may be reduced; however, when the thickness of the Sn plating is reduced, Sn in the surface layer undergoes alloying with Cu of the base material or Ni and Cu of the base plating, and Sn does not remain in the surface layer to cause a problem that the solderability or the contact resistance is degraded, and in particular, the degradation of the solderability or the contact resistance in a high temperature environment comes to be remarkable.

Accordingly, an object of the present invention is to provide a surface treated plating material being suppressed in the occurrence of whiskers, maintaining satisfactory solderability and satisfactory contact resistance even when exposed to a high temperature environment, and being low in the terminal-connector insertion force. Another object of the present invention is to provide a method for producing the surface treated plating material concerned. Yet another object of the present invention is to provide electronic components using the surface treated plating material concerned.

### [Solution to Problem]

The present inventor performed a continuous diligent study in order to solve the above-described problems, and consequently has discovered that unexpectedly, by applying Sn or Sn alloy plating to a Ni base plating and by further applying a surface treatment with a specific solution to the base plating, a surface treated plating material can be obtained which is free from the occurrence of whiskers and exhibits satisfactory solderability and satisfactory contact resistance even when the Sn plating is thin. Moreover, the surface treated plating material concerned allows the surface layer Sn or Sn alloy plating to be thin, and is low in insertion force when the surface treated plating material concerned is used a terminals. The occurrence of such a phenomenon as described above cannot be anticipated from conventional knowledge.

An aspect of the present invention perfected on the basis of the above-described discovery is a surface treated plating material free from whiskers, including: a metal base material; a lower layer constituted with Ni or Ni alloy plating; and an upper layer constituted with Sn or Sn alloy plating, wherein the lower layer and the upper layer are sequentially formed on the metal base material; P and N are present on the upper layer surface; the amounts of the P and N elements deposited on the upper layer surface are respectively P: 1 × 10⁻¹¹ to 4 × 10⁻⁸ mol/cm², and N: 2 × 10⁻¹² to 8 × 10⁻⁹ mol/cm².

Another aspect of the present invention is a method for producing the surface treated plating material, wherein the upper layer surface of the plating material including the lower layer and the upper layer sequentially formed on the base metal material is surface-treated with a phosphoric acid ester-based solution including at least one of the phosphoric acid esters represented by the following general formulas [1] and [2], and at least one selected from the group of the cyclic organic compounds represented by the following general formulas [3] and [4]: 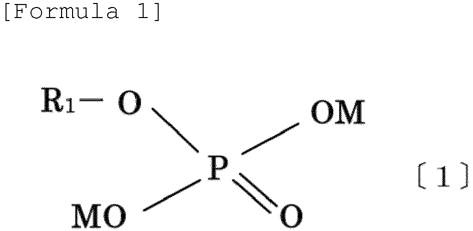 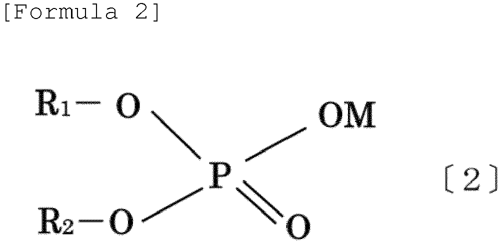 (wherein, in formulas [1] and [2], R₁ and R₂ each represent a substituted alkyl group and M represents a hydrogen atom or an alkali metal atom,) 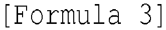 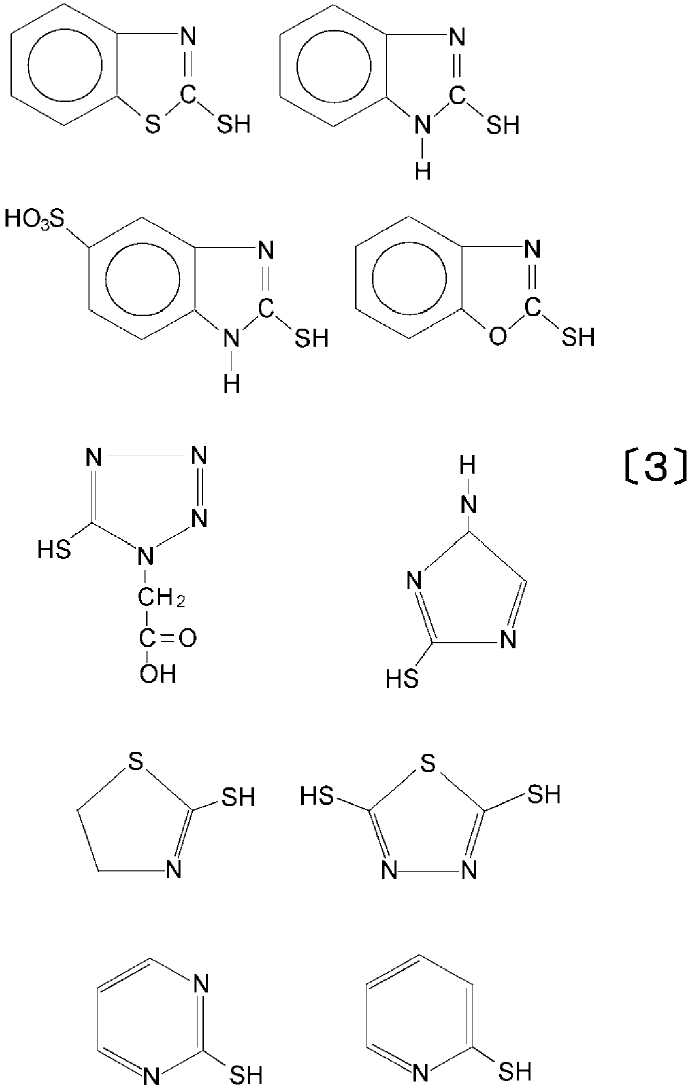 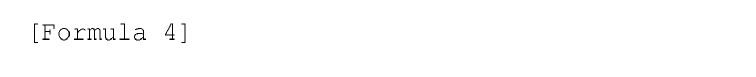 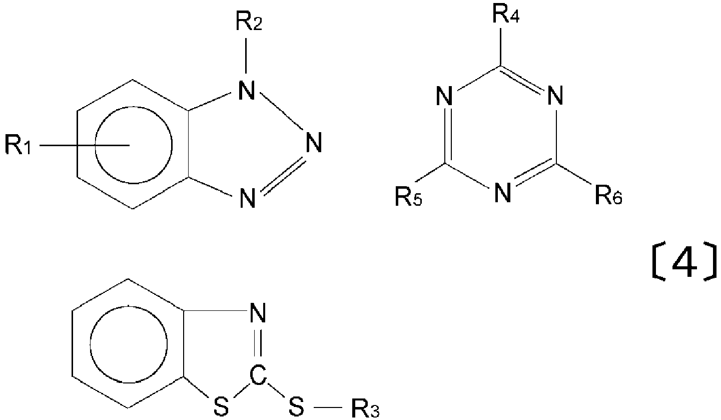 (wherein, in formulas [3] and [4], R₁ represents a hydrogen atom, an alkyl group or a substituted alkyl group; R₂ represents an alkali metal atom, a hydrogen atom, an alkyl group or a substituted alkyl group; R₃ represents an alkali metal atom or a hydrogen atom; R₄ represents -SH, an alkyl group-substituted or aryl group-substituted amino group, or represents an alkylsubstituted imidazolylalkyl group; and R₅ and R₆ each represent -NH₂, -SH or -SM (M represents an alkali metal atom).)

The present invention is, in yet another aspect thereof, an electronic component using the surface treated plating material of the present invention.

The present invention is, in yet another aspect thereof, a connector terminal using, in the contact portion thereof, the surface treated plating material of the present invention.

The present invention is, in yet another aspect thereof, a connector using the connector terminal of the present invention.

The present invention is, in yet another aspect thereof, an FFC terminal using, in the contact portion thereof, the surface treated plating material of the present invention.

The present invention is, in yet another aspect thereof, an FPC terminal using, in the contact portion thereof, the surface treated plating material of the present invention.

The present invention is, in yet another aspect thereof, an FFC using the FFC terminal of the present invention.

The present invention is, in yet another aspect thereof, an FPC using the FPC terminal of the present invention.

The present invention is, in yet another aspect thereof, an electronic component using, in the electrode thereof for external connection, the surface treated plating material of the present invention.

The present invention is, in yet another aspect thereof, an electronic component using the surface treated plating material of the present invention, in a push-in type terminal thereof for fixing a board connection portion to a board by pushing the board connection portion into the through hole formed in the board, wherein a female terminal connection portion and the board connection portion are provided respectively on one side and the other side of a mounting portion to be attached to a housing.

### [Advantageous Effects of Invention]

According to the present invention, it is possible to provide a surface treated plating material being suppressed in the occurrence of whiskers, maintaining satisfactory solderability and satisfactory contact resistance even when exposed to a high temperature environment, and being low in the terminal-connector insertion force.

### [Brief Description of Drawings]

[Figure 1] Figure 1 is an example of the XPS analysis results.
[Figure 2] Figure 2 is a graph showing the relation between the deposition amounts and the XPS detection intensities of the components of the post treatment solution.

### [Description of Embodiments]

Hereinafter, the surface treated plating material according to the embodiments of the present invention are described.

### <Plating Base Material>

As a plating base material (metal base material), copper or a copper alloy can be used. Copper or copper alloy may be optional copper or an optional copper alloy heretofore known as the base metal used for electronic components such as connectors and terminals; however, in consideration of the use as connecting terminals in electric/electronic devices, it is preferable to use the products high in electric conductivity (for example, approximately 15 to 80% in terms of the electric conductivity of the IACS (International Anneild Copper Standard) set at 100), and examples of such products include the alloys such as a Cu-Sn-P alloy (for example, phosphor bronze), a Cu-Zn alloy (for example, brass or red brass), a Cu-Ni-Zn alloy (for example, nickel silver), a Cu-Ni-Si alloy (Corson alloy) and a Cu-Fe-P alloy. On the other hand, as the plating base materials other than copper or copper alloys, stainless steels such as SUS301, SUS304 and SUS316 can also be used. The shape of the base metal is not particularly limited; in general, base metals are supplies in the forms of plates, strips, pressed products and the like, and either pre-plating or post-plating may be applied.

### <Lower Layer (Base Ni or Ni Alloy Plating)>

The base plating layer, which is the lower layer, is formed on the surface of the plating base material; in the present invention, Ni or Ni alloy plating is performed as the base plating layer. The base plating may have a laminated structure composed of a Ni plating and a Ni alloy plating. The Ni or Ni alloy plating in the lower layer serves as the barrier preventing the diffusion of Cu and alloy elements into the Ag or Ag alloy plating in the upper layer from the base material and into the Sn or Sn alloy plating over the Ag or Ag alloy plating. Cu as the base material Cu mutually diffuses with Ag or Sn in the upper layer, and produces a Cu-Ag alloy or a Cu-Sn alloy; when these alloys reaches the plating outermost surface and are oxidized, the solderability and the contact resistance are degraded.

As the Ni plating, for example, matte Ni plating using the Watts bath or the sulfamate bath, and a semi-glossy or glossy Ni plating using a bath prepared by adding a gloss agent to a matte plating bath can be used. The Ni alloy plating may be performed by electroplating conducted by using the Watts bath or the sulfamate bath to which phosphorous acid, cobalt sulfate or the like is added.

The lower layer may be constituted with one or two or more selected from the constituent element group C, namely, the group consisting of Ni, Cr, Mn, Fe, Co and Cu. Ni, Cr, Mn, Fe, Co and Cu provide a harder coating as compared with Sn and In, accordingly make the adhesive wear hardly occur, prevent the diffusion of the constituent metal(s) of the base material into the upper layer, and thus improve the durability in such a way that the degradation of the heat resistance or the degradation of the solder wettability is suppressed.

The lower layer is formed in such a way that the thickness of the lower layer is usually 0.1 µm to 5 µm and preferably 0.5 to 2.5 µm. This is because when the thickness of the lower layer (the base plating layer) is less than 0.1 µm, the diffusion prevention effect is not sufficiently obtained, and when the thickness of the lower layer exceeds 5 µm, the degradation of the bending processability is remarkable.

Plating is performed in such a way that the hardness of the lower layer is preferably 150 to 900 Hv and more preferably 200 to 600 Hv. When the hardness is less than 150 Hv, at the time of insertion of a connector, the contact portion thereof tends to bite into the plating base material to increase the insertion force. On the other hand, when the hardness exceeds 900 Hv, at the time of bending processing of the plating material, a failure such as the breakage of the plating tends to occur. As the method for regulating the hardness of the plating, for example, in the case of Ni plating, plating may be performed by varying the addition amount of an organic gloss agent, and in the case of Ni alloy plating, electroplating may be performed by varying the addition amounts of the alloy elements.

### <Upper Layer (Surface Layer Sn or Sn Alloy Plating)>

On the Ni or Ni alloy plating, which is the lower layer, Sn or Sn alloy plating is applied to form the upper layer. The occurrence and growth of whiskers depend on the thickness of the Sn or Sn alloy plating; the thinner the plating, the more difficult the occurrence of whiskers. Moreover, the thickness of the Sn or Sn alloy plating made thinner offers an advantage that the insertion force of the connector is made low. However, when the Sn or Sn alloy plating is made thin, the solderability or the contact resistance is degraded, and accordingly the plating thickness cannot be simply made thin. For the purpose of establishing compatibility between, for example, the whisker resistance and the solderability, the upper layer surface is treated by using a P-containing solution. This surface treatment allows the solderability and the contact resistance to be prevented from degradation. The surface treatment solution preferably contains P and N.

The thickness of the Sn or Sn alloy plating is preferably 0.02 to 0.5 µm and more preferably 0.03 to 0.3 µm. When the thickness of the Sn or Sn alloy plating is less than 0.02 µm, the solder wettability is slightly degraded, and on the other hand, when the thickness of the Sn or Sn alloy plating exceeds 0.5 µm, whiskers tend to occur and the connector insertion force is increased.

The Sn plating itself can be performed by heretofore known methods; however, the Sn plating can also be performed as an electroplating by using, for example, an organic acid bath (such as a phenolsulfonic acid bath, an alkanesulfonic acid bath or an alkanolsulfonic acid bath), an acidic bath such as a sulfuric acid bath or a pyrophosphoric acid bath, or an alkali bath such as a potassium bath or a sodium bath.

In the Sn alloy plating, for example, the Sn-Ag, Sn-In, Sn-Bi, Sn-Cu, and Sn-Pb alloys can be used. In the plating of these alloys, the plating layers are formed by performing electroplating using the baths prepared by adding the salts of, for example, Ag, In and Bi to the foregoing Sn plating baths.

The upper layer may also be constituted with an alloy composed of one or two selected from the constituent element group A, namely, the group consisting of Sn and In, and one or two or more selected from the constituent element group B, namely, the group consisting of Ag, Au, Pt, Pd, Ru, Rh, Os and Ir.

Sn and In are oxidizable metals, but are characterized by being relatively soft among metals. Accordingly, even when an oxide film is formed on the surface of Sn or In, for example at the time of joining together a male terminal and a female terminal by using a metallic material for electronic components as a contact material, the oxide film is easily scraped to result in contact between metals, and hence a low contact resistance is obtained.

Sn and In are excellent in the gas corrosion resistance against the gases such as chlorine gas, sulfurous acid gas and hydrogen sulfide gas; for example, when Ag poor in gas corrosion resistance is used for the upper layer, Ni poor in gas corrosion resistance is used for the lower layer, and copper or a copper alloy poor in gas corrosion resistance is used for the base material, Sn and In have an effect to improve the gas corrosion resistance of the metallic material for electronic components. As for Sn and In, Sn is preferable because In is severely regulated on the basis of the technical guidelines for the prevention of health impairment prescribed by the Ordinance of Ministry of Health, Labour and Welfare.

Ag, Au, Pt, Pd, Ru, Rh, Os and Ir are characterized by being relatively heat-resistant among metals. Accordingly, these metals suppress the diffusion of the composition of the base material and the lower layer toward the side of the upper layer to improve the heat resistance. These metals also form compounds with Sn or In in the upper layer to suppress the formation of the oxide film of Sn or In, so as to improve the solder wettability. Among Ag, Au, Pt, Pd, Ru, Rh, Os and Ir, Ag is more desirable from the viewpoint of electrical conductivity. Ag is high in electrical conductivity. For example, when Ag is used for high-frequency wave signals, impedance resistance is made low due to the skin effect.

The upper layer preferably includes the metal(s) of the constituent element group A in a content of 10 to 50 at%. When the content of the metal(s) of the constituent element group A is less than 10 at%, for example, in the case where the metal of the constituent element group B is Ag, the gas corrosion resistance is poor, and sometimes the exterior appearance is discolored when a gas corrosion test is performed. On the other hand, when the content of the metal(s) of the constituent element group A exceeds 50 at%, the proportion of the metal(s) of the constituent element group B in the upper layer is large, and hence the adhesive wear is increased and whiskers also tend to occur. Moreover, the fine sliding wear resistance is sometimes poor.

In the upper layer, the ζ(zeta)-phase being a Sn-Ag alloy including Sn in a content of 11.8 to 22.9 at% is preferably present. By the presence of the ζ(zeta)-phase, the gas corrosion resistance is improved, and the exterior appearance is hardly discolored even when the gas corrosion test is performed.

In the upper layer, the ζ(zeta)-phase and the ε(epsilon)-phase being Ag₃Sn are preferably present. By the presence of the ε(epsilon)-phase, as compared with the case where only the ζ(zeta)-phase is present in the upper layer, the coating becomes harder and the adhesive wear is decreased. The increase of the proportion of Sn in the upper layer improves the gas corrosion resistance.

In the upper layer, preferably only the ε(epsilon) - phase being Ag₃Sn is present. By the sole presence of the ε(epsilon)-phase in the upper layer, the coating becomes further harder and the adhesive wear is decreased as compared with the case where the ζ(zeta)-phase and the ε(epsilon)-phase being Ag₃Sn are present in the upper layer. The more increase of the proportion of Sn in the upper layer also improves the gas corrosion resistance.

The presence of the ε(epsilon)-phase being Ag₃Sn and the β-Sn being a Sn single phase in the upper layer is preferable. By the presence of the ε(epsilon)-phase being Ag₃Sn and β-Sn being a Sn single phase, the gas corrosion resistance is improved with a furthermore increase of the proportion of Sn in the upper layer as compared with the case where only the ε(epsilon)-phase is present in the upper layer.

In the upper layer, preferably the ζ(zeta)-phase being a Sn-Ag alloy including Sn in a content of 11.8 to 22.9 at%, the ε(epsilon)-phase being Ag₃Sn and β-Sn being a Sn single phase are present. By the presence of the ζ(zeta)-phase, the ε(epsilon)-phase being Ag₃Sn and β-Sn being a Sn single phase, the gas corrosion resistance is improved, the exterior appearance is hardly discolored even when a gas corrosion test is performed, and the adhesive wear is decreased. The composition concerned is created by diffusion and involves no structure in an equilibrium state.

The upper layer should not be present as solely composed of β-Sn. When the upper layer is present as solely composed of β-Sn, the adhesive wear is significant, whiskers occur and, for example, the heat resistance and the fine sliding wear resistance are degraded.

In the present invention, after applying the Sn or Sn alloy plating, a reflow treatment can also be performed. The reflow treatment as referred to herein means a method in which a plating material is heated to a temperature equal to or higher than the melting point (232°C) of Sn to melt Sn or the Sn alloy, and after a short period (3 to 20 seconds) of heating, the plating material is cooled. By performing the reflow treatment such that Sn is plated on Ag, and successively a reflow treatment is performed, a Sn-Ag alloy layer can also be formed on the surface layer. The Sn-Ag alloy layer has a solderability and a contact resistance equal to or better than those of the Sn layer.

On the surface of the upper layer, a region where the total atomic concentration (at%) of the constituent elements A ≥ the total atomic concentration (at%) of the constituent elements B and the atomic concentration (at%) of O ≥10 at% is preferably present in the range of 0.02 µm or less. The constituent elements A such as Sn has affinity with O, and hence the surface is bonded to O after Sn plating. Even when heat treatment is applied, the oxide of Sn formed by this bonding does not undergo Sn-Ag alloying and maintains the state before the heat treatment, the above-described region is present. However, when the region concerned exceeds the range of 0.02 µm, sometimes the contact resistance or the solder wettability is degraded.

### (Constituent Element Group C)

The metal(s) of the constituent element group C includes Ni, Cr, Mn, Fe, Co and Cu in the total amount of these of 50 mass% or more, and may further include one or two or more selected from the group consisting of B, P, Sn and Zn. The alloy composition of the lower layer having such a constitution as described above makes the lower layer harder and further improves the thin film lubrication effect to further decrease the adhesive wear; the alloying of the lower layer further prevents the diffusion of the constituent metals of the base material into the upper layer, and sometimes improves the durability such as the heat resistance and the solder wettability in such a way.

### (Constituent Element Group A)

The content of the metal(s) of the constituent element group A is 50% by mass or more in terms of the total content of Sn and In, and the rest alloy component may be composed of one or two or more selected from the group consisting of Ag, As, Au, Bi, Cd, Co, Cr, Cu, Fe, Mn, Mo, Ni, Pb, Sb, W and Zn. Sometimes, these metals further decrease the adhesive wear, suppress the occurrence of whisker, and additionally improve the durability such as the heat resistance or the solder wettability.

### (Constituent Element Group B)

The content of the metal(s) of the constituent element group B is 50% by mass or more in terms of the total content of Ag, Au, Pt, Pd, Ru, Rh, Os and Ir, and the rest alloy component may be composed of one or two or more selected from the group consisting of Bi, Cd, Co, Cu, Fe, In, Mn, Mo, Ni, Pb, Sb, Se, Sn, W, Tl and Zn. Sometimes, these metals further decrease the adhesive wear, suppress the occurrence of whisker, and additionally improve the durability such as the heat resistance or the solder wettability.

### (Diffusion Treatment)

The upper layer and the lower layer may be formed, by forming a film of one or two or more selected from the constituent element group C on the base material, then forming a film of one or two selected from the constituent element group B, then forming a film of one or two or more selected from the constituent element group A, and by diffusion of the respective selected elements of the constituent element group A, the constituent element group B and the constituent element group C. For example, when the metal from the constituent element group A is Sn and the metal from the constituent element group B is Ag, the diffusion of Ag into Sn is fast, and thus a Sn-Ag alloy layer is formed by spontaneous diffusion of Sn. The formation of the alloy layer can further reduce the adhesion force of Sn, and the low degree of whisker formation and the durability can also be further improved.

### (Heat Treatment)

After the formation of the upper layer, a heat treatment may be applied for the purpose of further suppressing the adhesive wear and further improving the low degree of whisker formation and the durability. The heat treatment allows the metal(s) of the constituent element group A and the metal(s) of the constituent element group B of the upper layer to form an alloy layer more easily, further reduces the adhesion force of Sn, and can further improve the low degree of whisker formation and the durability.

For the heat treatment, the treatment conditions (temperature × time) can be appropriately selected. The heat treatment is not particularly required to be applied. When the heat treatment is applied, the heat treatment performed at a temperature equal to or higher than the highest melting point of the metal(s) selected from the constituent element group A allows the metal(s) of the constituent element group A and the metal(s) of the constituent element group B of the upper layer to form an alloy layer more easily.

In the present invention, after performing the Sn or Sn alloy plating, a post-treatment using the below-described phosphoric acid ester-based solution is performed.

### <Post-Treatment (Phosphoric Acid Ester-Based Solution)>

The plating post-treatment (surface treatment) according to the present invention is preferably performed for the upper layer surface of the plating material by using an aqueous solution (referred to as the phosphoric acid ester-based solution) including one or two or more phosphoric acid esters and one or two or more cyclic organic compounds.

The phosphoric acid ester(s) added to the phosphoric acid ester-based solution plays the functions as an antioxidant for plating and a lubricant for plating. The phosphoric acid esters used in the present invention are represented by the general formula [1] and [2]. Examples of the preferable compounds among the compounds represented by the general formula [1] include lauryl acidic phosphoric acid monoester. Examples of the preferable compounds among the compounds represented by the general formula [2] include lauryl acidic phosphoric acid diester. 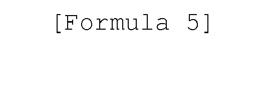 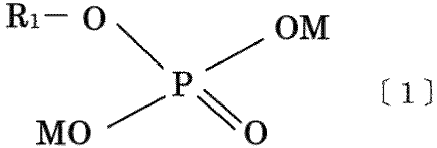 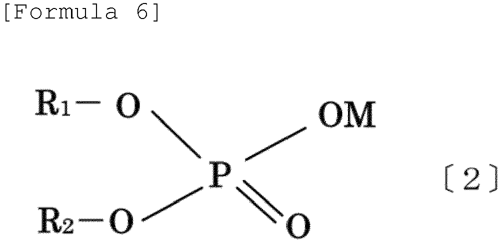 (wherein, in formulas [1] and [2], R₁ and R₂ each represent a substituted alkyl group and M represents a hydrogen atom or an alkali metal atom.)

The cyclic organic compound added to the phosphoric acid ester-based solution plays the function as an antioxidant for plating. The group of the cyclic organic compounds used in the present invention are represented by the general formula [3] and [4]. Examples of the preferable compounds among the cyclic organic compounds represented by the general formulas [3] and [4] include: mercaptobenzothiazole, Na salt of mercaptobenzothiazole, K salt of mercaptobenzothiazole, benzotriazole, 1-methyltriazole, tolyltriazole and triazine-based compounds. 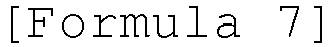 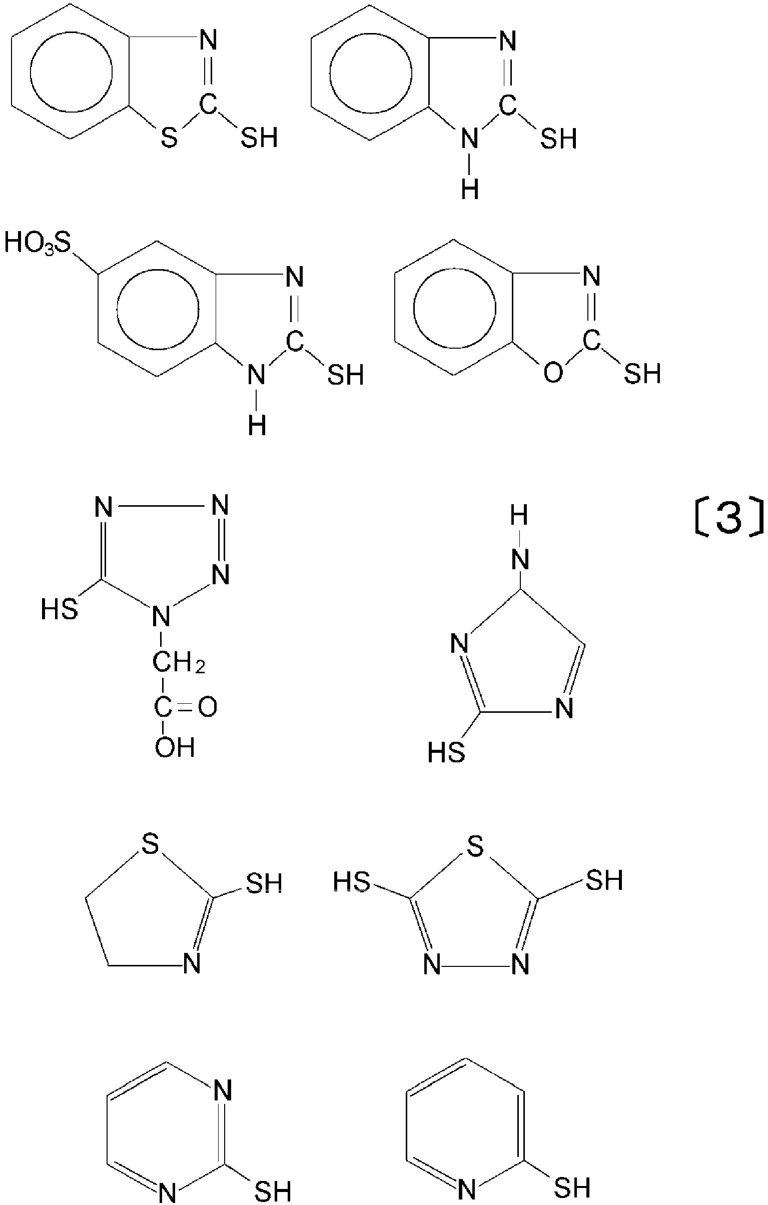 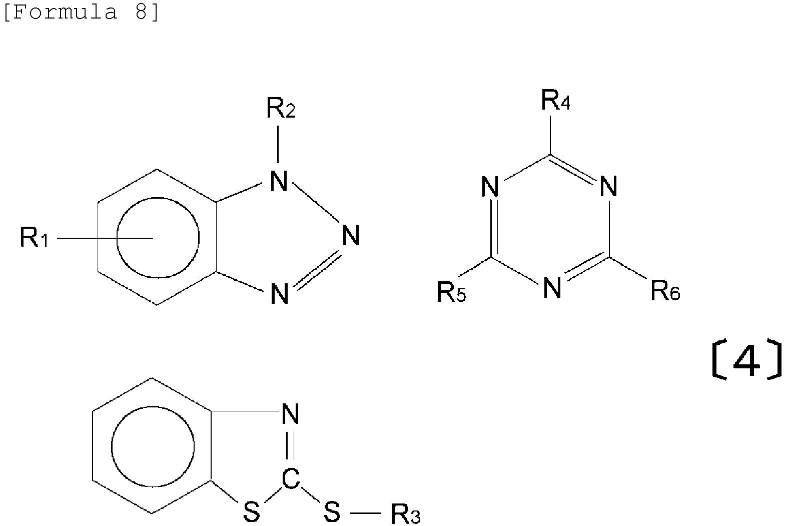 (wherein, in formulas [3] and [4], R₁ represents a hydrogen atom, an alkyl group or a substituted alkyl group; R₂ represents an alkali metal atom, a hydrogen atom, an alkyl group or a substituted alkyl group; R₃ represents an alkali metal atom or a hydrogen atom; R₄ represents -SH, an alkyl group-substituted or aryl group-substituted amino group, or represents an alkylsubstituted imidazolylalkyl group; and R₅ and R₆ each represent -NH₂, -SH or -SM (M represents an alkali metal atom).)

In the present invention, the post-treatment is performed in such a way that P and N are both present on the surface of the plating outermost layer, namely, surface of the Sn or Sn alloy plating. When P is absent on the plating surface, the solderability tends to be degraded, and the lubricity of the plating material is also degraded. On the other hand, when N is absent on the Sn or Sn alloy plating surface, the contact resistance of the plating material tends to be increased in a high temperature environment.

Moreover, in the present invention, it has been discovered that when the amounts of the respective elements deposited on the Sn or Sn alloy plating surface are respectively set to be P: 1 × 10⁻¹¹ to 4 × 10⁻⁸ mol/cm², and N: 2 × 10⁻¹² to 8 × 10⁻⁹ mol/cm², the solderability is further hardly degraded, the lubricity is satisfactory and the increase of the contact resistance is also small. When the deposition amount of P is less than 1 × 10⁻¹¹ mol/cm², the solder wettability tends to be degraded, and when the deposition amount of P exceeds 4 × 10⁻⁸ mol/cm², the failure of the increase of the contact resistance occurs.

On the other hand, in the present invention it has been discovered that when in the XPS analysis performed for the plating material of the present invention, with I(P2s) denoting the photoelectron detection intensity due to the 2S orbital electron of P to be detected and I(N1s) denoting the photoelectron detection intensity due to the 1S orbital electron of N to be detected, the relation 0.1 ≤ I(P2s)/I(N1s) ≤ 1 is satisfied, the contact resistance and the solderability of the plating material are hardly degraded in a high temperature environment. When the value of I(P2s)/I(N1s) is less than 0.1, for example, the function to prevent the contact resistance degradation is not sufficient, and when the value of I(P2s)/I(N1s) exceeds 1, the contact resistance at the early stage comes to be slightly high, but, as described below, the dynamic friction coefficient of the plating material comes to be small. In this case, I(P2s) and I(N1s) more preferably satisfy the relation 0.3 ≤ I(P2s)/I(N1s) ≤ 0.8.

In the present invention it has been discovered that when in the XPS analysis performed, in the same manner as described above, for the plating material of the present invention, with I(P2s) denoting the photoelectron detection intensity due to the 2S orbital electron of P to be detected and I(N1s) denoting the photoelectron detection intensity due to the 1S orbital electron of N to be detected, the relation 1 ≤ I(P2s)/I(N1s) ≤ 50 is satisfied, the dynamic friction coefficient of the plating material comes to be small and the insertion force of terminals and connectors comes to be low. When the value of I(P2s)/I(N1s) is 1 or less, the insertion force comes to be slightly high, and when the value of I(P2s)/I(N1s) exceeds 50, the insertion force comes to be low, but the contact resistance at the early stage comes to be high and the solderability at the early stage is also degraded. In this case, I(P2s) and I(N1s) more preferably satisfy the relation 5 < I(P2s)/I(N1s) ≤ 40.

The concentration of the phosphoric acid ester(s) for obtaining the deposition amounts of the post-treatment solution components on the surface of the plating material of the present invention is 0.1 to 10 g/L, and preferably 0.5 to 5 g/L. On the other hand, the concentration of the cyclic organic compound(s) is, in relation to the total volume of the treatment solution, 0.01 to 1.0 g/L and preferably 0.05 to 0.6 g/L.

The phosphoric acid ester-based solution is an aqueous solution having the above-described components, and when the solution is heated to increase the temperature of the solution to 40 to 80°C, the emulsification of the components into water proceeds faster, and the drying of the materials after the treatment is facilitated.

The surface treatment may also be performed by applying the phosphoric acid ester-based solution to the surface of the plating material after the Sn or Sn alloy plating. Examples of the method for applying the solution concerned include: spray coating, flow coating, dip coating and roll coating; from the viewpoint of productivity, dip coating or spray coating is preferable. On the other hand, as another treatment method, the surface treatment with the phosphoric acid ester-based solution may also be performed by conducting an electrolysis by immersing the plating material after the Sn or Sn alloy plating in the phosphoric acid ester-based solution and using as the anode the plating material. The surface treated plating material subjected to the treatment based on this method offers an advantage that the contact resistance in a high temperature environment is more hardly increased.

The hitherto presented description of the surface treatment with the phosphoric acid ester-based solution may be performed either after the application of the Sn or Sn alloy plating or after the reflow treatment subsequent to the Sn or Sn alloy plating. The surface treatment is not particularly temporarily limited, but from industrial viewpoint, the surface treatment is preferably performed as a sequence of steps.

The surface treated plating material according to the present invention is suitable for use in electronic components such as connectors, male terminals, female terminals, press-fit terminals, crimp-type terminals, switches and leadframes. As described above, the Sn plating according to the present invention may be applied after processing copper or copper alloy into intended shapes by, for example, press processing, or the plating according to the present invention may also be applied before processing. The electronic components using the surface treated plating material according to the present invention exhibits excellent properties such that the occurrence of whiskers is suppressed, the solderability is satisfactory, the degradation of the contact resistance in a high temperature environment is low, and the application of the surface treated plating material to fitting members such as terminals results in more decreased insertion force.

The arithmetic mean height (Ra) of the surface of the upper layer is preferably 0.3 µm or less. The arithmetic mean height (Ra) of the surface of the upper layer being 0.3 µm or less reduces the raised portions of the surface relatively tending to be corroded, thus smoothes the surface and improves the gas corrosion resistance.

The maximum height (Rz) of the surface of the upper layer is preferably 3 µm or less. The maximum height (Rz) of the surface of the upper layer being 3 µm or less reduces the raised portions relatively tending to be corroded, thus smoothes the surface and improves the gas corrosion resistance.

### <Applications of Surface Treated Plating Material>

Examples of the application of the surface treated plating material of the present invention include, without being particularly limited to: a connector terminal using, in the contact portion thereof, the surface treated plating material, an FFC terminal or an FPC terminal using, in the contact portion thereof, the surface treated plating material, and an electronic component using, in the electrode thereof for external connection, the surface treated plating material. The terminal does not depend on the connection mode on the wiring side as exemplified by a crimp-type terminal, a soldering terminal and a press-fit terminal. Examples of the electrode for external connection include a connection component prepared by applying a surface treatment to a tab, and material surface treated for use in under bump metal of a semiconductor.

Connectors may also be prepared by using such connector terminals formed as described above, and an FFC or an FPC may also be prepared by using an FFC terminal or an FPC terminal.

The surface treated plating material of the present invention may also be used in a push-in type terminal for fixing a board connection portion to a board by pushing the board connection portion into the through hole formed in the board, wherein a female terminal connection portion and the board connection portion are provided respectively on one side and the other side of a mounting portion to be attached to a housing.

In a connector, both of the male terminal and the female terminal may be made of the surface treated plating material of the present invention, or only one of the male terminal and the female terminal may be made of the surface treated plating material of the present invention. The use of the surface treated plating material of the present invention for both of the male terminal and the female terminal further improves the low degree of insertion/extraction force.

### <Method for Producing Surface Treated Plating Material>

As the method for producing the surface treated plating material of the present invention, for example, either a wet plating (electroplating or electroless plating) or a dry plating (sputtering or ion plating) can be used.

### [Examples]

Hereinafter, Examples of the present invention are presented; these Examples are provided for better understanding of the present invention, and are not intended to limit the present invention.

### [Example Group 1]

### (Preparation of Surface Treated Plating Material)

A brass plate of 50 mm in width, 100 mm in length and 0.64 mm in thickness was used as a plating base material (metal base material), first subjected to an electrolytic degreasing using a commercially available degreasing solution, and successively subjected to acid cleaning with an aqueous solution of sulfuric acid.

Next, as base plating, Ni or Ni alloy plating was performed. A sulfamate-based solution was used as a plating solution, and gloss agents (saccharin, butynediol) were added to the plating solution to regulate the hardness of the plating coating.

For the Sn or Sn alloy plating of the surface layer, the Sn alloy plating was prepared by using a plating solution based on methanesulfonic acid, tin methanesulfonate and nonionic surfactants, and by adding sulfates of various elements to the plating solution.

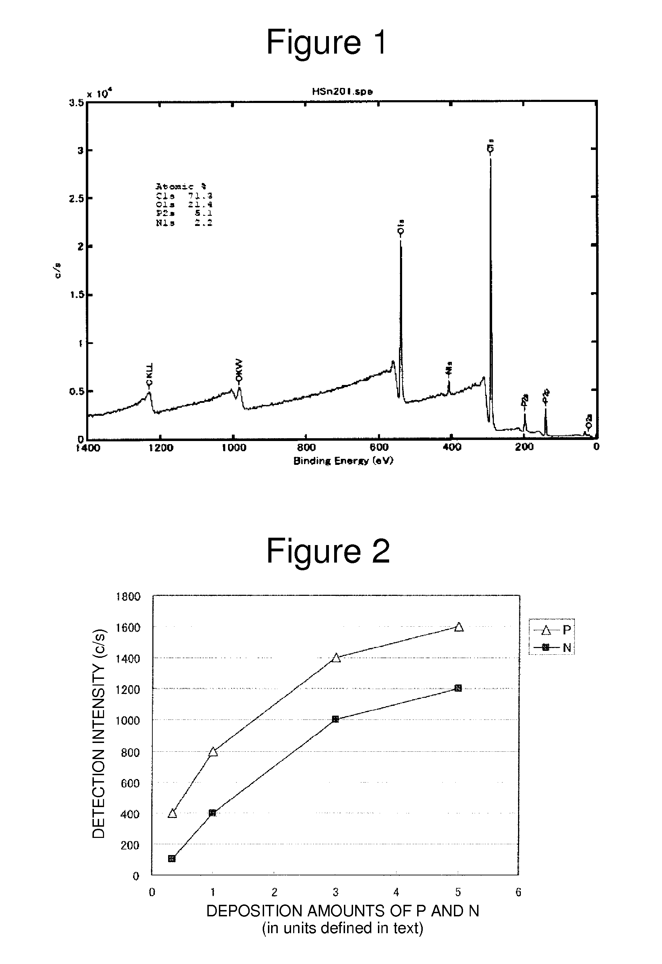

Successively, a phosphoric acid ester-based solution was used as a surface treatment solution, application based on immersion or anode electrolysis (2 V, potentiostatic electrolysis) was performed, and thus the surface treatment of the plating surface was performed. After these treatments, the samples were dried with hot air. For the determination of the amounts of P and N deposited on the plating surface, first by using several samples having known deposition amounts, a quantitative analysis based on XPS (X-ray photoelectron analysis method) was performed, and the detection intensities (number of counts detected in 1 second) of P(2s orbital) and N(1s orbital) were measured. Next, on the basis of the thus obtained results, the relations between the deposition amounts and the detection intensities were derived, and from these relations, the deposition amounts of P and N of unknown samples were determined. Figure 1 shows an example of the XPS analysis results. Figure 2 shows the relations between the deposition amounts of the post-treatment solution components (P and N) and the XPS detection intensities (the unit of the deposition amount of P = 1.1 × 10⁻⁹ mol/cm²; the unit of the deposition amount of N = 7.8 × 10⁻¹¹ mol/cm²)_{.}

### (Measurement Methods of Individual Properties)

The individual properties were measured by the following methods.

### (1) Thicknesses of Individual Plating Layers

The thicknesses of the base Ni or Ni alloy plating and the surface Sn or Sn alloy plating layer were measured with the X-ray fluorescent analysis thickness meter (SFT-5100, manufactured by Seiko Denshi Kogyo K.K.). In each of the specimens, the analysis was performed at three positions and the average value of the three measured values was taken as the measurement value.

### (2) Measurement of Hardness of Plating Coating

The hardness of the base Ni or Ni alloy plating layer was measured with a micro-hardness tester (MXT-50, manufactured by Matsuzawa Co., Ltd.) under the condition of an indenter load of 10 g.

### (3) Contact Resistance

The contact resistance was measured with the contact simulator CRS-1 manufactured by Yamasaki-seiki Co., Ltd., under the condition of the contact load of 50 g and an electric current of 200 mA, on the basis of the four-terminal method. The evaluation was performed at 155°C, before and after a 16-hour atmospheric heating.

### (4) Solderability

A solder checker (SAT-5000, manufactured by Rhesca Corp.) was used, a rosin-alcohol solution flux was used as a flux, and the solder wetting time was measured by a meniscograph method. As a solder bath, a Sn-3Ag-0.5Cu bath (bath temperature: 250°C) was used. The evaluation was performed at 155°C, before and after a 16-hour atmospheric heating.

### (5) Method for Evaluating Whiskers

The evaluation of whiskers was performed as follows: indenters (zirconia balls of 1 mm in diameter) were brought into contact with the Sn plating surface of a sample, and were allowed to stand under an applied load of 1.5 N, for 168 hours at room temperature in an atmosphere of air; then the sample was taken out, the surface of the sample was observed with a SEM, and the maximum length of the whiskers was measured.

### (6) Dynamic Friction Coefficient

Measurement was performed by using as the measurement apparatus, Model Heiden-14 manufactured by Shinto Scientific Co., Ltd., under the condition of an indenter load of 500 g. The measurement of the dynamic friction coefficient allows the insertion force of a terminal or a connector to be estimated.

### (7) Sulfide Resistance Test

The gas corrosion tester GA180 manufactured by Yamasaki-seiki Co., Ltd. was used as the tester, a test was performed under the conditions that the H₂S concentration was 3 ppm, the test temperature was 40°C, the humidity was 80% RH and the test time was 96 hours, and the plating surface was observed and the occurrence or nonoccurrence of discoloration was verified.

Tables 1 to 3 show the specifications and the evaluation results of the plating samples prepared in Examples and Comparative Examples.

**[Table 1]**

| Items | No. | Base Ni or Ni alloy plating (lower layer) | | | Surface layer Sn or Sn alloy plating (upper layer) | | Conditions of treatment with phosphoric acid ester-based solution | | | | Intensity ratio I(P2s)/I(N1s) between P and N detected by XPS |
|---|---|---|---|---|---|---|---|---|---|---|---|
| | | Plating species | Thickness µm | Hardness Hv | Plating species | Thickness µm | Phosphoric acid ester species | Cyclic organic compound species | Deposition amount of P mol/cm² | Deposition amount of N mol/cm² | |
| Examples | 1 | Ni | 1.0 | 270 | Sn | 0.3 | A1 | B1 | 1×10⁻⁹ | 8×10⁻¹¹ | 1.13 |
| | 2 | Ni-Co | 1.0 | 280 | Sn | 0.3 | A1 | B1 | 2×10⁻⁹ | 8×10⁻¹¹ | 1.47 |
| | 3 | Ni-Sn over Ni | 1.0 | 270 | Sn-Ag | 0.3 | A1 | B1 | 2×10⁻⁹ | 8×10⁻¹¹ | 1.47 |
| | 4 | Ni | 1.0 | 270 | Sn | 0.3 | A1 | B1 | 3×10⁻⁹ | 9×10⁻¹¹ | 1.82 |
| | 5 | Ni | 1.0 | 270 | Sn-Ag | 0.3 | A1 | B1 | 2×10⁻⁹ | 8×10⁻¹¹ | 1.47 |
| | 6 | Ni | 1.0 | 270 | Sn-Bi | 0.3 | A1 | B1 | 3×10⁻⁹ | 8×10⁻¹¹ | 2.20 |
| | 7 | Ni | 1.0 | 270 | Sn | 0.3 | A2 | B1 | 2×10⁻⁹ | 8×10⁻¹¹ | 1.40 |
| | 8 | Ni | 1.0 | 270 | Sn | 0.3 | A1 | B2 | 2×10⁻⁹ | 9×10⁻¹¹ | 1.83 |
| | 9 | Ni | 1.0 | 270 | Sn | 0.3 | A1 | B3 | 2×10⁻⁹ | 8×10⁻¹¹ | 1.29 |
| | 10 | Ni | 1.0 | 270 | Sn | 0.3 | A1 | B3 | 1×10⁻¹² | 8×10⁻¹¹ | 0.06 |
| | 11 | Ni | 1.0 | 270 | Sn | 0.3 | A1 | B1 | 1×10⁻¹¹ | 8×10⁻¹¹ | 0.13 |
| | 12 | Ni | 1.0 | 270 | Sn | 0.3 | A1 | B1 | 4×10⁻⁸ | 8×10⁻¹¹ | 10.67 |
| | 13 | Ni | 1.0 | 270 | Sn | 0.3 | A1 | B1 | 7×10⁻¹⁰ | 2×10⁻¹² | 1.62 |
| | 14 | Ni | 1.0 | 270 | Sn | 0.3 | A1 | B1 | 2×10⁻⁹ | 8×10⁻⁹ | 0.66 |
| | 15 | Ni | 1.0 | 270 | Sn* | 0.3 | A1 | B1 | 2×10⁻⁹ | 8×10⁻¹¹ | 1.47 |
| | 16 | Ni | 1.0 | 270 | Sn | 0.3 | A1 | B1 | 2×10⁻⁹ | 8×10⁻¹¹ | 1.47 |
| | 17 | Ni | 1.0 | 153 | Sn | 0.3 | A1 | B1 | 2×10⁻⁹ | 9×10⁻¹¹ | 1.29 |
| | 18 | Ni-P | 1.0 | 895 | Sn | 0.3 | A1 | B1 | 2×10⁻⁹ | 8×10⁻¹¹ | 1.29 |
| | 19 | Ni | 1.0 | 270 | Sn | 0.3 | A1 | B1 | 5×10⁻¹² | 8×10⁻¹³ | 1.00 |
| | 20 | Ni | 1.0 | 270 | Sn | 0.3 | A1 | B1 | 8×10⁻⁸ | 4×10⁻⁸ | 3.49 |
| | 21 | Ni | 1.0 | 270 | Sn | 0.3 | A1 | B1 | 9×10⁻⁷ | 8×10⁻¹¹ | 53.40 |
| | 22 | Ni | 1.0 | 270 | Sn | 0.02 | A1 | B1 | 2×10⁻⁹ | 8×10⁻¹¹ | 1.47 |
| | 23 | Ni | 1.0 | 270 | Sn | 0.5 | A1 | B1 | 2×10⁻⁹ | 8×10⁻¹¹ | 1.47 |
| | 24 | Ni | 1.0 | 270 | Sn | 1.0 | A1 | B1 | 2×10⁻⁹ | 8×10⁻¹¹ | 1.47 |
| | 25 | Ni | 1.0 | 270 | Sn | 0.3 | A1 | --- | 2×10⁻⁹ | --- | --- |

| | | | | | | | | | | | |
|---|---|---|---|---|---|---|---|---|---|---|---|
| *) After Sn plating, a reflow treatment was performed at 280°C for 5 seconds, and successively a treatment with a phosphoric acid ester solution was performed (Example 14). *) In relation to "Conditions of treatment with phosphoric acid ester-based solution," in Example 15, anode electrolysis was performed at 2 V for 5 seconds, and in Examples other than Example 15, immersion treatment was performed. A1: Lauryl acidic phosphoric acid monoester (phosphoric acid monolauryl ester) A2: Lauryl acidic phosphoric acid diester (phosphoric acid dilauryl ester) B1: Benzotriazole B2: Na salt of mercaptobenzothiazole B3: Tolyltriazole | | | | | | | | | | | |

**[Table 2]**

| Items | No. | Base Ni or Ni alloy plating (upper layer) | | | Surface layer Sn or Sn alloy plating (lower layer) | | Conditions of treatment with phosphoric acid ester-based solution | | | | Intensity ratio I(P2s)/I(N1s ) between P and N detected by XPS |
|---|---|---|---|---|---|---|---|---|---|---|---|
| | | Plating species | Thickness µm | Hardness Hv | Plating species | Thickness µm | Phosphoric acid ester species | Cyclic organic compound species | Deposition amount of P mol/cm² | Deposition amount of N mol/cm² | |
| Comparative Examples | 1 | | | | Sn | 0.3 | A1 | B1 | 2×10⁻⁹ | 8×10⁻¹¹ | 1.47 |
| | 2 | Ni | 1.0 | 270 | | | A1 | B1 | 2×10⁻⁹ | 8×10⁻¹¹ | 1.47 |
| | 3 | Ni | 1.0 | 270 | Sn | 0.3 | | | | | 0 |
| | 4 | Ni | 1.0 | 270 | Sn | 0.3 | | B1 | 8×10⁻¹¹ | | 0 |

| | | | | | | | | | | | |
|---|---|---|---|---|---|---|---|---|---|---|---|
| A1: Lauryl acidic phosphoric acid monoester (phosphoric acid monolauryl ester) B1: Benzotriazole | | | | | | | | | | | |

**[Table 3]**

| Items | No. | Contact resistance (mΩ) | | Solder wetting time (sec) | | Maximum whisker length (µm) | Dynamic friction coefficient | Occurrence/nonoccurrence of discoloration after sulfide test |
|---|---|---|---|---|---|---|---|---|
| | | Early stage | After heating at 155°C for 16 hours | Early stage | After heating at 155°C for 16 hours | | | |
| Examples | 1 | 1.5 | 1.9 | 1.0 | 1.5 | 0 | 0.34 | Not discolored |
| | 2 | 1.4 | 1.8 | 1.0 | 1.4 | 0 | 0.34 | Not discolored |
| | 3 | 1.5 | 2.0 | 0.9 | 1.5 | 0 | 0.33 | Not discolored |
| | 4 | 1.4 | 1.9 | 1.0 | 1.6 | 0 | 0.35 | Not discolored |
| | 5 | 1.5 | 1.9 | 1.1 | 1.6 | 0 | 0.34 | Not discolored |
| | 6 | 1.5 | 2.0 | 1.0 | 1.7 | 0 | 0.36 | Not discolored |
| | 7 | 1.4 | 1.9 | 1.0 | 1.5 | 0 | 0.36 | Not discolored |
| | 8 | 1.3 | 1.8 | 0.9 | 1.4 | 0 | 0.34 | Not discolored |
| | 9 | 1.4 | 1.9 | 1.0 | 1.5 | 0 | 0.33 | Not discolored |
| | 10 | 1.3 | 2.4 | 1.0 | 2.3 | 10 | 0.48 | Not discolored |
| | 11 | 1.2 | 1.8 | 0.8 | 2.0 | 0 | 0.41 | Not discolored |
| | 12 | 1.6 | 2.1 | 1.3 | 1.6 | 0 | 0.31 | Not discolored |
| | 13 | 1.5 | 2.2 | 0.9 | 1.7 | 0 | 0.33 | Not discolored |
| | 14 | 1.6 | 1.9 | 1.2 | 1.7 | 0 | 0.34 | Not discolored |
| | 15 | 1.3 | 1.8 | 1.1 | 1.6 | 0 | 0.31 | Not discolored |
| | 16 | 1.3 | 1.5 | 1.0 | 1.3 | 0 | 0.32 | Not discolored |
| | 17 | 1.4 | 1.8 | 1.0 | 1.6 | 0 | 0.39 | Not discolored |
| | 18 | 1.4 | 1.7 | 1.1 | 1.5 | 0 | 0.31 | Not discolored |
| | 19 | 1.1 | 2.1 | 1.0 | 2.2 | 0 | 0.42 | Not discolored |
| | 20 | 1.7 | 1.9 | 1.2 | 2.3 | 0 | 0.30 | Not discolored |
| | 21 | 2.3 | 2.5 | 2.2 | 2.5 | 0 | 0.24 | Not discolored |
| | 22 | 1.4 | 1.7 | 1.0 | 1.7 | 0 | 0.35 | Not discolored |
| | 23 | 1.5 | 1.8 | 1.0 | 1.6 | 10 | 0.42 | Not discolored |
| | 24 | 1.5 | 1.8 | 1.1 | 1.8 | 30 | 0.46 | Not discolored |
| | 25 | 1.1 | 2.2 | 1.0 | 1.7 | 0 | 0.34 | Not discolored |
| Comparative Examples | 1 | 1.4 | 4.3 | 2.5 | 5.0 | 0 | 0.52 | Not discolored |
| | 2 | 1.4 | 3.8 | 3.5 | 5.0 | 0 | 0.35 | Discolored |
| | 3 | 1.3 | 1.7 | 1.0 | 5.0 | 45 | 0.58 | Not discolored |
| | 4 | 1.3 | 3.9 | 1.0 | 3.5 | 0 | 0.50 | Not discolored |

As can be seen from Tables presented above, the surface treated plating materials of Examples 1 to 25 of the present invention were all free from the occurrence of whiskers, or underwent the occurrence of extremely short whiskers (length: 10 µm) even when whiskers occurred. In Example 24, the amounts of the P and N element deposited on the plating surface respectively fall in the ranges of P: 1 × 10⁻¹¹ to 4 × 10⁻⁸ mol/cm² and N: 2 × 10⁻¹² to 8 × 10⁻⁹ mol/cm²; however, the Sn plating thickness is large and the whisker length tended to be long, and hence Example 24 can be said not to be the best mode.

On the other hand, the contact resistance was low in value at the early stage and after the high-temperature heating, and the solderability was also satisfactory before and after heating. Moreover, the dynamic friction coefficient was smaller in value as compared with a common Sn plating material (Comparative Example 3), and thus the decrease of the connector insertion force was verified.

On the contrary, in Comparative Examples 1 to 4, for example, the following failures were verified: the increase of the contact resistance after heating, the solderability poor at the early stage or degraded after heating, the high dynamic friction coefficient and the discoloration after the sulfide test.

### [Example Group 2]

As Examples of Example Group 2, under the conditions shown in the table presented below, the surface treatment was performed in the sequence of electrolytic degreasing, acid cleaning, first plating, second plating, third plating and heat treatment.

### (Materials)

(1) Plate: thickness: 0.30 mm, width: 30 mm, component: Cu-30Zn
(2) Male terminal: thickness: 0.64 mm, width: 2.3 mm, component: Cu-30Zn
(3) Push-in type terminal: Press-fit terminal PCB connector, R800, manufactured by Tokiwa & Co., Inc.

### (Plating Conditions)

First Plating: Semi-glossy Ni plating
   Surface treatment method: Electroplating
   Plating solution: Ni sulfamate plating solution + saccharin
   Plating temperature: 55°C
   Electric current density: 0.5 to 4 A/dm²
Second Plating: Ag plating
   Surface treatment method: Electroplating
   Plating solution: Ag cyanide plating solution
   Plating temperature: 40°C
   Electric current density: 0.2 to 4 A/dm²
Third Plating: Sn plating
   Surface treatment method: Electroplating
   Plating solution: Sn methanesulfonate plating solution
   Plating temperature: 40°C
   Electric current density: 0.5 to 4 A/dm²

### (Heat Treatment)

The heat treatment was performed by placing the sample on a hot plate, and verifying that the surface of the hot plate reached the predetermined temperature.

### (Post-Treatment)

The same surface treatment as in Example 15 was performed. Subsequently, the sample was dried with hot air. For the determination of the amounts of P and N deposited on the plating surface, first by using several samples having known deposition amounts, a quantitative analysis based on XPS (X-ray photoelectron analysis method) was performed, and the detection intensities (number of counts detected in 1 second) of P(2s orbital) and N(1s orbital) were measured. Next, on the basis of the thus obtained results, the relations between the deposition amounts and the detection intensities were derived, and from these relations, the deposition amounts of P and N of unknown samples were determined.

### (Determination of Structures [Compositions] and Measurement of Thicknesses of Upper Layer)

The determination of the structures and the measurement of the thicknesses of the upper layer of each of the obtained samples were performed by the line analysis based on the STEM (scanning transmission electron microscope) analysis. The analyzed elements are the elements in the compositions of the upper layer, and C, S and O. These elements are defined as the specified elements. On the basis of the total concentration of the specified elements defined as 100%, the concentrations (at%) of the respective elements were analyzed. The thickness corresponds to the distance determined from the line analysis (or area analysis). As the STEM apparatus, the JEM-2100F manufactured by JEOL Ltd. was used. The acceleration voltage of this apparatus is 200 kV.

In the determination of the structures and measurement of the thicknesses of the upper layer of each of the obtained samples, the evaluations were performed for arbitrary 10 points and the resulting values were averaged.

### (Measurement of Thickness of Lower Layer)

The thickness of the lower layer was measured with the X-ray fluorescent analysis thickness meter (SEA5100, collimator: 0.1 mmφ, manufactured by Seiko Instruments Inc.).

In the measurement of the thickness of the lower layer, the evaluations were performed for arbitrary 10 points and the resulting values were averaged.

### (Evaluations)

For each of the samples, the following evaluations were performed.

### A. Whiskers

Whiskers were evaluated by the load test (ball indenter method) of JEITA RC-5241. Specifically, each of the samples was subjected to the load test, and each of the samples subjected to the load test was observed with a SEM (model JSM-5410, manufactured by JEOL Ltd.) at a magnification of 100× to 10000×, and thus the occurrence state of the whiskers was observed. The load test conditions are shown below.
Diameter of ball indenter: φ 1 mm ± 0.1 mm
Test load: 2 N ± 0.2 N
Test time: 120 hours
Number of samples: 10

The intended property is such that no whiskers 20 µm or more in length occurs, and the biggest intended target is such that no whiskers of any length occur.

### B. Contact resistance

The contact resistance was measured with the contact simulator model CRS-113-Au manufactured by Yamasaki-seiki Co., Ltd., under the condition of the contact load of 50 kg, on the basis of the four-terminal method. The number of the samples was set at five, and the range from the minimum value to the maximum value of each of the samples was adopted. The intended target was the contact resistance of 10 mΩ or less.

### C. Fine Sliding Wear Resistance

The fine sliding wear resistance was evaluated in terms of the relation between the number of the sliding operations and the contact resistance by using the fine sliding tester model CRS-G2050 manufactured by Yamasaki-seiki Co., Ltd., under the conditions of a sliding distance of 0.5 mm, a sliding speed of 1 mm/s, a contact load of 1 N, and a number of the back and forth sliding operations of 500. The number of the samples was set at five, and the range from the minimum value to the maximum value of each of the samples was adopted. The intended property was such that the contact resistance was 100 mΩ or less at the time of the number of sliding operations of 100.

### D. Solder Wettability

The solder wettability was evaluated for the samples after plating. A solder checker (SAT-5000, manufactured by Rhesca Corp.) was used, a commercially available 25% rosin-methanol flux was used as a flux, and the solder wetting time was measured by a meniscograph method. A solder Sn-3Ag-0.5Cu (250°C) was used. The number of the samples was set at five, and the range from the minimum value to the maximum value of each of the samples was adopted. The intended property was such that the zero cross time was 5 seconds (s) or less.

### E. Gas Corrosion Resistance

The gas corrosion resistance was evaluated in the following test environment. The evaluation of the gas corrosion resistance was based on the exterior appearance of each of the samples after the completion of an environmental test. The intended property was such that the exterior appearance is hardly discolored or somewhat discolored to a degree practically causing no problem.
Hydrogen sulfide gas corrosion test
Hydrogen sulfide concentration: 10 ppm
Temperature: 40°C
Humidity: 80% RH
Exposure time: 96 h
Number of samples: 5

### F. Surface Roughness

The measurement of the surface roughness (the arithmetic mean height (Ra) and the maximum height (Rz)) was performed according to JIS B 0601, by using a noncontact three-dimensional measurement apparatus (model NH-3, manufactured by Mitaka Kohki Co., Ltd.). The cutoff was 0.25 mm, the measurement length was 1.50 mm, and the measurement was repeated five times for one sample.

The test conditions and the test results are shown in the tables presented below. In the tables presented below, the "composition" represents the ratio between the respective atomic concentrations (at%).

**[Table 4]**

| | | First plating | Second plating | Third plating | Heat treatment | | | Upper layer | | |
|---|---|---|---|---|---|---|---|---|---|---|
| | | Thickness [µm] | Thickness [µm] | Thickness [µm] | Temperature [°C] | Time [sec] | Atmosphere | Composition | Structure | Thickness |
| | | | | | | | | | | [µm] |
| Examples | 26 | 1 | 0.22 | 0.14 | 300 | 3 | The air | Ag:Sn=8:2 | ζ-Phase ε-phase | 0.30 |
| | 27 | 1 | 0.35 | 0.14 | 300 | 3 | The air | Ag:Sn=85:15 | ζ-Phase | 0.30 |
| | 28 | 1 | 0.1 | 0.2 | 300 | 3 | The air | Ag:Sn=4:6 | ε-phase + β-Sn phase | 0.30 |
| | 29 | 1 | 0.2 | 0.17 | 300 | 3 | The air | Ag:Sn=3:1 | ε-Phase | 0.30 |
| | 30 | 1 | 0.22 | 0.14 | 300 | 3 | The air | Ag:Sn=8:2 | ζ-Phase ε-phase | 0.30 |
| | 31 | 1 | 0.22 | 0.14 | 300 | 3 | The air | Ag:Sn=8:2 | ζ-Phase ε-phase | 0.30 |
| | 32 | 1 | 0.22 | 0.14 | 500 | 1 | 100% Oxygen | Ag:Sn=8:2 | ζ-Phase ε-phase | 0.30 |

**[Table 5]**

| | | Lower layer | | Upper layer | | Contact resistance [mΩ] | | Solder wetting time [sec] | | Maximum whisker length | Dynamic friction coefficient | Occurrence/nonoccurrence of discoloration after sulfide test |
|---|---|---|---|---|---|---|---|---|---|---|---|---|
| | | Composition | Thickness | Surface roughness | | | | | | | | |
| | | | | Ra | Rz | Early stage | After heating at 155°C for 16 hours | Early stage | After heating at 155°C for 16 hours | | | |
| | | | [µm] | [µm] | [µm] | | | | | [µm] | | |
| Examples | 26 | Ni(semi-glossy) | 1 | 0.22 | 2.35 | 1.3 | 1.7 | 1 | 1.3 | 0 | 0.25 | Not discolored |
| | 27 | Ni(semi-glossy) | 1 | --- | --- | 1.4 | 1.4 | 0.9 | 1.2 | 0 | 0.27 | Not discolored |
| | 28 | Ni(semi-glossy) | 1 | --- | --- | 1.3 | 1.2 | 0.8 | 1.1 | 0 | 0.23 | Not discolored |
| | 29 | Ni(semi-glossy) | 1 | --- | --- | 1.5 | 1.5 | 0.9 | 1.3 | 0 | 0.27 | Not discolored |
| | 30 | Ni(semi-glossy) | 1 | 0.18 | 1.8 | 1.2 | 1.4 | 0.7 | 1 | 0 | 0.26 | Not discolored |
| | 31 | Ni(semi-glossy) | 1 | 0.13 | 1.2 | 1.1 | 1.3 | 1.1 | 1.4 | 0 | 0.24 | Not discolored |
| | 32 | Ni(semi-glossy) | 1 | --- | --- | 1.8 | 2.1 | 1.5 | 1.7 | 0 | 0.25 | Not discolored |

**[Table 6]**

| | | Upper layer surface | Contact resistance [mΩ] | | Solder wetting time [sec] | |
|---|---|---|---|---|---|---|
| | | Region where atomic concentration (at%) of Sn ≥ atomic concentration (at%) of Ag and atomic concentration (at%) of O ≥10 at% | | | | |
| | | | Early stage | After heating at 155°C for 16 hours | Early stage | After heating at 155°C for 16 hours |
| | | [µm] | | | | |
| Examples | 26 | 0.0005 to 0.005 | 1.3 | 1.7 | 1 | 1.3 |
| | 27 | 0.0005 to 0.005 | 1.4 | 1.4 | 0.9 | 1.2 |
| | 28 | 0.0005 to 0.005 | 1.3 | 1.2 | 0.8 | 1.1 |
| | 29 | 0.0005 to 0.005 | 1.5 | 1.5 | 0.9 | 1.3 |
| | 32 | 0.030 | 1.8 | 2.1 | 1.5 | 1.7 |

As can be seen from the tables presented above, the surface treated plating materials of Examples 26 to 32 of the present invention were all suppressed in the occurrence of whiskers, each maintained satisfactory solderability and satisfactory contact resistance even when exposed in a high temperature environment, and were low in contact resistance.

## Claims

1. A surface treated plating material free from whiskers, comprising: a metal base material; a lower layer constituted with Ni or Ni alloy plating; and an upper layer constituted with Sn or Sn alloy plating, wherein the lower layer and the upper layer are sequentially formed on the metal base material; P and N are present on the upper layer surface; the amounts of the P and N elements deposited on the upper layer surface are respectively P: 1 × 10⁻¹¹ to 4 × 10⁻⁸ mol/cm², and N: 2 × 10⁻¹² to 8 × 10⁻⁹ mol/cm².

2. The surface treated plating material according to claim 1, wherein in the XPS analysis performed for the upper layer, with I(P2s) denoting the photoelectron detection intensity due to the 2S orbital electron of P to be detected and I(N1s) denoting the photoelectron detection intensity due to the 1S orbital electron of N to be detected, the relation 0.1 ≤ I(P2s)/I(N1s) ≤ 1 is satisfied.

3. The surface treated plating material according to claim 1, wherein in the XPS analysis performed for the upper layer, with I(P2s) denoting the photoelectron detection intensity due to the 2S orbital electron of P to be detected and I(N1s) denoting the photoelectron detection intensity due to the 1S orbital electron of N to be detected, the relation 1 ≤ I(P2s)/I(N1s) ≤ 50 is satisfied.

4. The surface treated plating material according to any one of claims 1 to 3, wherein the hardness of the lower layer is 150 to 900 Hv.

5. The surface treated plating material according to any one of claims 1 to 4, wherein the thickness of the upper layer is 0.02 to 0.5 µm.

6. The surface treated plating material according to any one of claims 1 to 5, wherein the upper layer is constituted with an alloy composed of Sn or Sn and In selected from a constituent element group A, namely, the group consisting of Sn and In, and one or two or more selected from a constituent element group B, namely, the group consisting of Ag, Au, Pt, Pd, Ru, Rh, Os and Ir.

7. The surface treated plating material according to claim 6, wherein on the surface of the upper layer, a region where the total atomic concentration (at%) of the constituent elements A ≥ the total atomic concentration (at%) of the constituent elements B and the atomic concentration (at%)of O ≥ 10 at% of O is present in the range of 0.02 µm or less.

8. The surface treated plating material according to claim 6 or 7, wherein the upper layer comprises the metal(s) of the constituent element group A in a content of 10 to 50 at%.

9. The surface treated plating material according to any one of claims 6 to 8, wherein in the upper layer, a ζ(zeta)-phase being a Sn-Ag alloy including Sn in a content of 11.8 to 22.9 at% is present.

10. The surface treated plating material according to any one of claims 6 to 8, wherein in the upper layer, an ε(epsilon)-phase being Ag₃Sn is present.

11. The surface treated plating material according to any one of claims 6 to 8, wherein in the upper layer, a ζ(zeta)-phase being a Sn-Ag alloy including Sn in a content of 11.8 to 22.9 at% and an ε(epsilon)-phase being Ag₃Sn are present.

12. The surface treated plating material according to any one of claims 6 to 8, wherein in the upper layer, only the ε(epsilon)-phase being Ag₃Sn is present.

13. The surface treated plating material according to any one of claims 6 to 8, wherein in the upper layer, the ε(epsilon)-phase being Ag₃Sn and β-Sn being a Sn single phase are present.

14. The surface treated plating material according to any one of claims 6 to 8, wherein in the upper layer, the ζ(zeta)-phase being a Sn-Ag alloy including Sn in a content of 11.8 to 22.9 at%, the ε(epsilon)-phase being Ag₃Sn and β-Sn being a Sn single phase are present.

15. The surface treated plating material according to any one of claims 1 to 14, wherein the arithmetic mean height (Ra) of the surface of the upper layer is 0.3 µm or less.

16. The surface treated plating material according to any one of claims 1 to 15, wherein the maximum height (Rz) of the surface of the upper layer is 3 µm or less.

17. The surface treated plating material according to any one of claims 1 to 16, wherein the lower layer is constituted with Ni, or Ni and other one or two or more elements selected from a constituent element group C, namely, the group consisting of Ni, Cr, Mn, Fe, Co and Cu.

18. The surface treated plating material according to claim 17, wherein the upper layer, namely, the Sn alloy layer and the lower layer, namely, the Ni alloy layer are formed, by forming on the base material a film of Ni, or Ni and other one or two or more elements selected from the constituent element group C, then forming a film of one or two or more selected from the constituent element group B, then forming a film of Sn, or Sn and In selected from the constituent element group A, and by diffusion of the respective selected elements of the constituent element group A, the constituent element group B and the constituent element group C.

19. The surface treated plating material according to claim 18, wherein the diffusion is performed by heat treatment.

20. The surface treated plating material according to claim 19, wherein the heat treatment is performed at a temperature equal to higher than the melting point(s) of the metal(s) of the constituent element group A, an alloy layer of one or two selected from the constituent element group A and one or two or more selected from the constituent element group B are formed.

21. The surface treated plating material according to any one of claims 17 to 20, wherein the content of the metal(s) of the constituent element group C is 50% by mass or more in terms of the total content of Ni, Cr, Mn, Fe, Co and Cu, and one or two or more selected from the group consisting of B, P, Sn and Zn are further included.

22. The surface treated plating material according to any one of claims 6 to 21, wherein the content of the metal(s) of the constituent element group A is 50% by mass or more in terms of the total content of Sn and In, and the rest alloy component is composed of one or two or more selected from the group consisting of Ag, As, Au, Bi, Cd, Co, Cr, Cu, Fe, Mn, Mo, Ni, Pb, Sb, W and Zn.

23. The surface treated plating material according to any one of claims 6 to 22, wherein the content of the metal(s) of the constituent element group B is 50% by mass or more in terms of the total content of Ag, Au, Pt, Pd, Ru, Rh, Os and Ir, and the rest alloy component is composed of one or two or more selected from the group consisting of Bi, Cd, Co, Cu, Fe, In, Mn, Mo, Ni, Pb, Sb, Se, Sn, W, Tl and Zn.

24. A method for producing the surface treated plating material according to any one of claims 1 to 23, wherein the upper layer surface of the plating material including the lower layer and the upper layer sequentially formed on the base metal material is surface-treated with a phosphoric acid ester-based solution including at least one of the phosphoric acid esters represented by the following general formulas [1] and [2], and at least one selected from the group of the cyclic organic compounds represented by the following general formulas [3] and [4] : 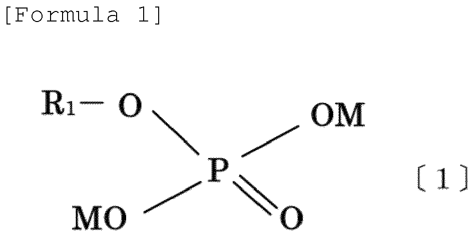 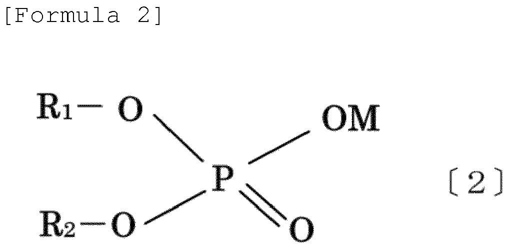 (wherein, in formulas [1] and [2], R₁ and R₂ each represent a substituted alkyl group and M represents a hydrogen atom or an alkali metal atom,) 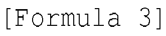 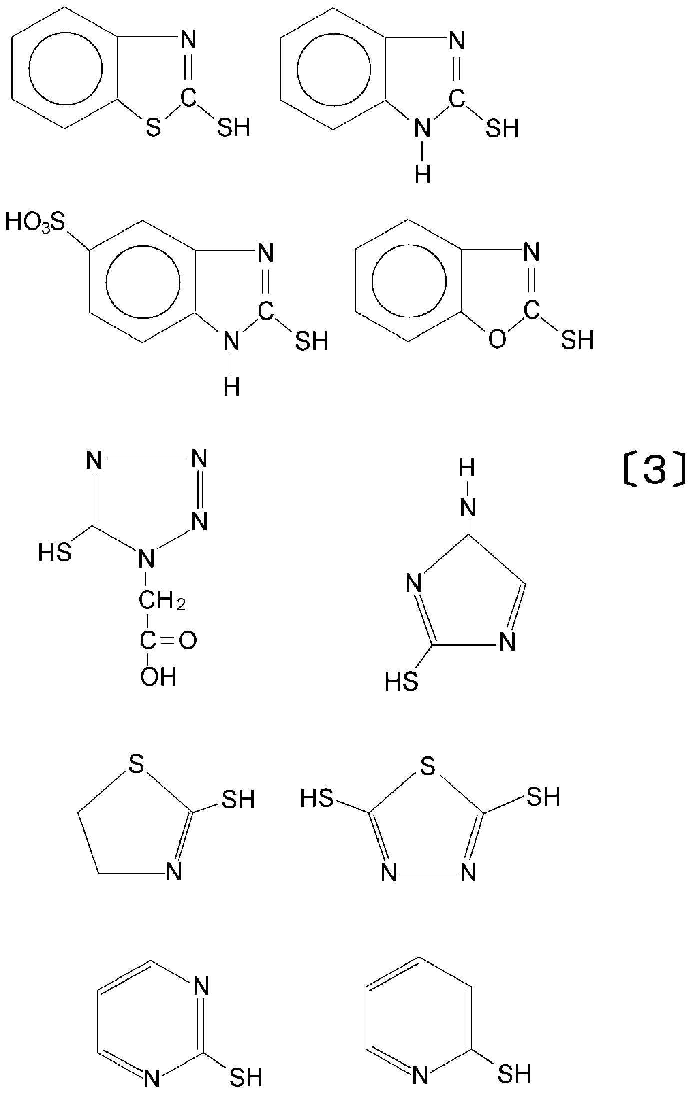 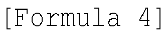 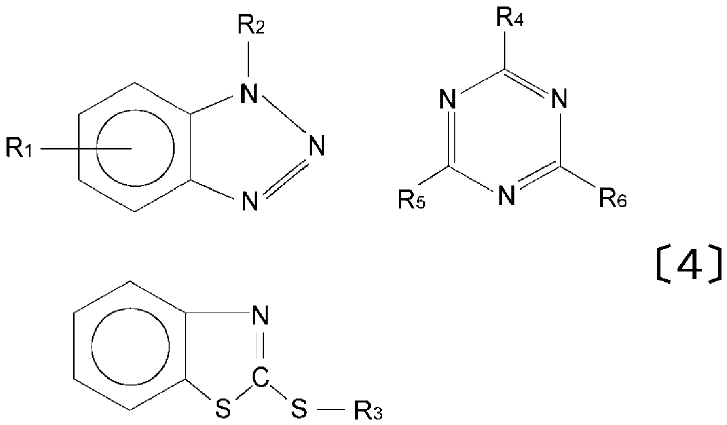 (wherein, in formulas [3] and [4], R₁ represents a hydrogen atom, an alkyl group or a substituted alkyl group; R₂ represents an alkali metal atom, a hydrogen atom, an alkyl group or a substituted alkyl group; R₃ represents an alkali metal atom or a hydrogen atom; R₄ represents -SH, an alkyl group-substituted or aryl group-substituted amino group, or represents an alkylsubstituted imidazolylalkyl group; and R₅ and R₆ each represent -NH₂, -SH or -SM (M represents an alkali metal atom).)

25. The method for producing a surface treated plating material according to claim 24, wherein the surface treatment with the phosphoric acid ester-based solution is performed by applying the phosphoric acid ester-based solution to the upper layer.

26. The method for producing a surface treated plating material according to claim 24, wherein the surface treatment with the phosphoric acid ester-based solution is performed by conducting an electrolysis by immersing the plating material after the Sn or Sn alloy plating in the phosphoric acid ester-based solution and using as the anode the plating material.

27. An electronic component using the surface treated plating material according to any one of claims 1 to 23.

28. A connector terminal using, in the contact portion thereof, the surface treated plating material according to any one of claims 1 to 23.

29. A connector using the connector terminal according to claim 28.

30. An FFC terminal using, in the contact portion thereof, the surface treated plating material according to any one of claims 1 to 23.

31. An FPC terminal using, in the contact portion thereof, the surface treated plating material according to any one of claims 1 to 23.

32. An FFC using the FFC terminal according to claim 30.

33. An FPC using the FPC terminal according to claim 31.

34. An electronic component using, in the electrode thereof for external connection, the surface treated plating material according to any one of claims 1 to 23.

35. An electronic component using the surface treated plating material according to any one of claims 1 to 23, in a push-in type terminal thereof for fixing a board connection portion to a board by pushing the board connection portion into the through hole formed in the board, wherein a female terminal connection portion and the board connection portion are provided respectively on one side and the other side of a mounting portion to be attached to a housing.
